# DEMANDE DE BREVET EUROPEEN

(11) **EP 4 723 411 A1**
(43) Date de publication de la demande: **08.04.2026**
(21) Numéro de dépôt: 25206689.9
(22) Date de dépôt: 03.10.2025
(51) Int. Cl.: H02H 3/20, H02H 3/24, H02H 1/06

(54) **DÉCLENCHEUR SHUNT À MINIMUM OU MANQUE DE TENSION POUR UN DISJONCTEUR, ENSEMBLE ET PROCÉDÉ ASSOCIÉS**

(30) Priorité: 04.10.2024 FR 2410742
(71) Demandeur: SCHNEIDER ELECTRIC INDUSTRIES SAS, 92500 Rueil-Malmaison (FR)
(72) Inventeur: MABILLOT, Hugo, 38000 GRENOBLE (FR); MORIN, Alexandre, 38180 SEYSSINS (FR)
(74) Mandataire: Lavoix

(57) **Abrégé**

La présente invention concerne un déclencheur shunt à minimum ou manque de tension (1) pour un disjoncteur (2). Le déclencheur (1) comprend :
- un bloc de charge (7), connecté électriquement entre une première borne (3) et une deuxième borne (5), comprenant une charge (16) configurée pour actionner le disjoncteur (2) ;
- un module de protection (9), comprenant :
• un thyristor de protection contre des surtensions (27) et une varistance (29), en série entre eux et en parallèle du bloc de charge (7) ; et
• un premier condensateur (33), en parallèle de la varistance (29) ;

- un élément fusible (15) et un premier fil résistif (11) en série entre eux, connectés entre la première borne (3) et le module de protection (9) ; et
- un deuxième fil résistif (13), connecté entre le module de protection (9) et la deuxième borne (5).

## Description

La présente invention concerne un déclencheur shunt à minimum ou manque de tension. Elle concerne également un ensemble comprenant un tel déclencheur et un disjoncteur. Elle concerne enfin un procédé de déclenchement d'un tel disjoncteur.

Un disjoncteur est un dispositif de protection d'une installation électrique pouvant être actionné à distance par un déclencheur shunt à minimum ou manque de tension (aussi appelé en anglais *shunt trip actuator* ou *close trip actuator*) selon la norme IEC 60947-2, lorsque ce déclencheur détecte la présence d'une tension dépassant un seuil. De tels dispositifs peuvent notamment être installés à la tête d'une installation électrique, où la puissance électrique est relativement élevée.

Lorsqu'ils sont insérés dans un réseau électrique, les déclencheurs shunt à minimum ou manque de tension sont soumis à des variations ponctuelles de tensions d'amplitude variable. Ces variations de tensions sont susceptibles de provoquer la casse des déclencheurs et une perte de service sur l'ensemble de l'installation électrique.

On connaît différentes techniques permettant de protéger un actionneur contre des surtensions dans un dispositif électronique. Par exemple, il est connu d'employer un thyristor et une varistance en série afin d'atténuer les surtensions. Notamment, le document WO202325609A1 décrit un procédé de fonctionnement d'un appareil comprenant une protection contre les surtensions au moyen d'un thyristor et d'une varistance en parallèle d'un condensateur et d'une résistance.

Toutefois, les solutions existantes de protection contre les surtensions ne sont pas adaptées et optimisées pour des déclencheurs shunt à minimum ou manque de tension, qui présentent des contraintes de taille et de structure particulières.

Le but de l'invention est alors de proposer un déclencheur shunt à minimum ou manque de tension présentant une résistance accrue à des surtensions provenant d'un réseau électrique externe au dispositif, en tenant compte de contraintes d'encombrement, de coût et de structure d'un tel équipement.

A cet effet, l'invention a pour objet un déclencheur shunt à minimum ou manque de tension pour un disjoncteur, le déclencheur comprenant :
- une première borne et une deuxième borne d'application d'une tension d'entrée entre elles ;
- un bloc de charge, connecté électriquement entre la première borne et la deuxième borne, comprenant une charge configurée pour actionner une ouverture ou une fermeture du disjoncteur au moyen d'un actionneur mécanique ;
- un module de protection, comprenant :
   - un thyristor de protection contre des surtensions, connecté électriquement entre un premier point intermédiaire et un deuxième point intermédiaire ; et
   - une varistance, connectée électriquement entre le deuxième point intermédiaire et un troisième point intermédiaire, en série avec le thyristor de protection contre des surtensions, le thyristor de protection contre des surtensions et la varistance étant en parallèle du bloc de charge;
- un premier condensateur, appartenant au module de protection, connecté électriquement en parallèle de la varistance ;
- un élément fusible et un premier fil résistif en série entre eux, connectés électriquement entre la première borne et le module de protection, le premier fil résistif présentant une résistance supérieure ou égale à 0.5Ω ; et
- un deuxième fil résistif, présentant une résistance supérieure ou égale à 0.5Ω, connecté électriquement entre le module de protection et la deuxième borne.

Grace à l'invention, une surtension provenant du réseau électrique externe, survenant entre la première borne et la deuxième borne, est partiellement atténuée par le thyristor et la varistance en série, de manière à protéger la charge. Notamment, la présence du thyristor permet de diminuer la taille de la varistance, et donc de limiter l'encombrement dans le dispositif, pour une même capacité d'atténuation des surtensions. En outre, le premier condensateur et les fils résistifs permettent d'absorber une surtension résiduelle aux bornes de la varistance. En effet, le thyristor devient passant avant la varistance, ce qui entraîne une surtension de très courte durée aux bornes de la varistance, qui risque à terme d'altérer la durée de vie de la varistance. L'atténuation de la surtension par le premier condensateur et les fils résistifs permet de limiter cet effet, prolongeant ainsi la durée de vie du déclencheur. En outre, la présence des fils résistifs qui permettent de limiter le courant lors d'une surtension et de l'élément fusible qui permet de diminuer le risque de surchauffe et/ou d'incendie du déclencheur en cas de défaillance du thyristor ou de la varistance.

Suivant d'autres aspects avantageux de l'invention, le déclencheur comprend une ou plusieurs des caractéristiques suivantes, prises isolément ou suivant toutes les combinaisons techniquement possibles :
- le déclencheur comprend une première résistance en série avec le premier condensateur, la résistance et le premier condensateur étant en parallèle de la varistance ;
- le bloc de charge comprend un pont redresseur de tension, le pont redresseur de tension prenant en entrée une tension aux bornes du module de protection et donnant en sortie une tension aux bornes de la charge ;
- le déclencheur un module de détection, connecté électriquement au moins au deuxième point intermédiaire et à une unité de contrôle et configuré pour détecter et transmettre à l'unité de contrôle une occurrence d'un évènement de surtension entre la première borne et la deuxième borne ;
- le module de détection comprend :
   - une première diode, connectée électriquement entre le deuxième point intermédiaire et un quatrième point intermédiaire ;
   - une deuxième résistance, connectée électriquement entre le quatrième point intermédiaire et un cinquième point intermédiaire ;
   - une troisième résistance, connectée électriquement entre le cinquième point intermédiaire et une masse ;
   - une deuxième diode, connectée électriquement entre le troisième point intermédiaire et le quatrième point intermédiaire ;
   - une troisième diode, connectée électriquement entre le cinquième point intermédiaire et un sixième point intermédiaire ;
   - un deuxième condensateur, connecté électriquement entre le sixième point intermédiaire et la masse ; et
   - une quatrième résistance, connectée électriquement entre le sixième point intermédiaire et l'unité de contrôle ;
et le cinquième point intermédiaire est connecté électriquement avec l'unité de contrôle ;
- le bloc de charge comprend un troisième condensateur, de filtrage, connecté électriquement en parallèle de la charge ;
- la charge comprend :
   - un module de mesure, configuré pour mesurer la tension aux bornes de la charge ;
   - une bobine d'appel, configurée pour faire activer l'actionneur mécanique ; et
   - une bobine de maintien, configurée pour maintenir l'actionneur mécanique en position ;
- le déclencheur est un déclencheur shunt à minimum de tension et l'actionneur mécanique est configuré pour :
   - ouvrir le disjoncteur après activation par la bobine d'appel ; ou
   - fermer le disjoncteur après activation par la bobine d'appel ;
- le déclencheur est un déclencheur shunt à manque de tension et l'actionneur mécanique est configuré pour :
   - ouvrir le disjoncteur après activation par la bobine d'appel ; et
   - empêcher la fermeture du disjoncteur lorsque l'actionneur mécanique est maintenu en position par la bobine de maintien.

L'invention concerne également un ensemble comprenant un déclencheur selon ce qui précède et un disjoncteur.

Un tel ensemble présente les mêmes avantages que le déclencheur de l'invention, en particulier une durée de vie du déclencheur augmentée.

L'invention concerne également un procédé de fonctionnement du déclencheur appartenant à un ensemble selon ce qui précède, en cas de surtension entre la première borne et la deuxième borne, engendrant un courant de surtension entre la première borne et la deuxième borne, le procédé comprenant :
- une circulation du courant de surtension à travers l'élément fusible, le premier fil résistif et le deuxième fil résistif ;
- une déviation primaire d'au moins une partie du courant de surtension à travers le thyristor de protection contre des surtensions et la varistance ;
- une déviation secondaire d'au moins une autre partie du courant de surtension à travers le premier condensateur ; et
- activation de l'actionneur mécanique par la charge.

Ce procédé présente l'avantage que la fonction d'ouverture ou de fermeture du disjoncteur par le déclencheur est assurée en même temps que l'énergie électrique due à la surtension est dissipée lors des déviations primaire et secondaire, préservant ainsi les différents composants du déclencheur contre les surtensions.

L'invention apparaîtra plus clairement à la lecture de la description qui va suivre, donnée uniquement à titre d'exemple non limitatif, et faite en référence au dessin dans lequel :

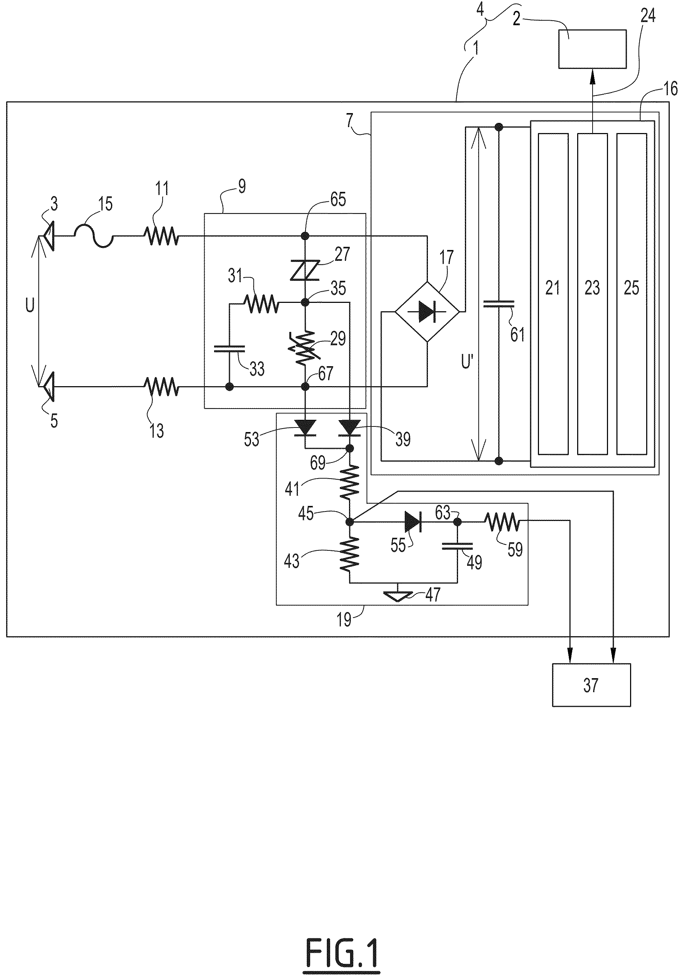

- la figure 1 est un schéma d'un ensemble comprenant un disjoncteur et un déclencheur shunt à minimum ou manque de tension selon l'invention.

La figure 1 illustre un déclencheur shunt à minimum ou manque de tension 1 pour un disjoncteur 2. Le déclencheur 1 et le disjoncteur 2 associé forment un ensemble 4, destiné à être inséré dans une installation électrique non représentée. En particulier, l'ensemble 4 est avantageusement destiné à être inséré en tête d'une installation électrique et raccordé à un réseau électrique externe.

En variante non représentée, le déclencheur 1 est intégré au disjoncteur 2.

Le déclencheur 1 comprend une première borne 3 et une deuxième borne 5, un bloc de charge 7, un module de protection 9, un premier fil résistif 11, un deuxième fil résistif 13 et un élément fusible optionnel 15. Avantageusement, le déclencheur 1 comprend, en outre, un module de détection 19.

Le déclencheur 1 est raccordé au réseau électrique externe par la première borne 3 et la deuxième borne 5. Le réseau électrique externe applique une tension d'entrée U entre la première borne 3 et la deuxième borne 5. Ainsi, les bornes 3 et 5 sont des bornes d'application de la tension U en entrée de du déclencheur 1. Avantageusement, l'objectif du déclencheur 1 est d'actionner à distance le disjoncteur 2, de manière à interrompre ou rétablir une circulation d'un courant dans l'installation électrique en fonction de la tension d'entrée U.

Selon un premier exemple de l'invention, le déclencheur 1 est un déclencheur shunt à minimum de tension. En d'autres termes, le disjoncteur 1 est configuré pour actionner le disjoncteur 2 lorsque la tension d'entrée U dépasse un certain seuil de tension maximale prédéterminé. On appelle surtension, ou évènement de surtension, le passage de la tension d'entrée U au-dessus du seuil de tension maximale prédéterminé.

Selon un deuxième exemple de l'invention, le déclencheur 1 est un déclencheur shunt à manque de tension. En d'autres termes, le déclencheur 1 est configuré pour actionner le disjoncteur 2 lorsque la tension d'entrée U passe sous un seuil de tension minimale prédéterminé.

Dans la suite de la description, le cas du déclencheur shunt à minimum de tension est décrit, le cas du disjoncteur shunt à manque de tension pouvant être déduit par analogie.

Le bloc de charge 7 est connecté électriquement entre la première borne 3 et la deuxième borne 5 et comprend une charge 16, configurée pour actionner une ouverture ou une fermeture du disjoncteur 2. Avantageusement, le bloc de charge 7 comprend, en outre, un pont redresseur de tension 17.

La charge 16 comprend avantageusement un module de mesure 21, une bobine d'appel 23 et une bobine de maintien 25.

Le module de mesure 21 a pour rôle de mesurer la tension U' aux bornes de la charge 16 et de comparer cette tension U' au seuil de tension maximale prédéterminé.

La bobine d'appel 23 est configurée pour activer un actionneur mécanique 24. L'actionneur mécanique 24 est avantageusement configuré pour ouvrir le disjoncteur 2 après activation par la bobine d'appel 23, coupant ainsi un courant circulant dans l'installation électrique. En variante, l'actionneur mécanique 24 est configuré pour fermer le disjoncteur 2 après activation par la bobine d'appel 23. L'actionneur mécanique 24 est par exemple un doigt mécanique qui, par translation entre une position sortie et une position rentrée, vient agir sur un mécanisme du disjoncteur 2 de manière à ouvrir ou fermer le disjoncteur 2.

La bobine de maintien 25 est configurée pour maintenir l'actionneur mécanique 24 en position sortie ou rentrée. Avantageusement, l'actionneur mécanique 24 est configuré pour relâcher le disjoncteur 2 lorsque l'actionneur mécanique 24 n'est plus maintenu par la bobine de maintien 25, de sorte à autoriser un retour du disjoncteur 2 dans son état initial ouvert ou fermé.

Dans le cas d'un déclencheur shunt à manque de tension, l'actionneur mécanique 24 est configuré pour ouvrir le disjoncteur 2 après activation par la bobine d'appel 23 et pour empêcher la fermeture du disjoncteur 2 lorsque l'actionneur mécanique 24 est maintenu en position par la bobine de maintien 25.

Le pont redresseur de tension 17 prend en entrée la tension U aux bornes du module de protection 9 et donne en sortie une tension U' aux bornes de la charge 16. Le pont redresseur de tension 17 est avantageux lorsque le réseau électrique fournit une tension d'entrée U alternative. Le pont redresseur de tension 17 permet alors de convertir la tension d'entrée U alternative en tension U' continue aux bornes de la charge 16.

Le module de protection 9 a pour rôle de protéger le déclencheur 1 contre les surtensions survenant dans le réseau électrique externe, c'est-à-dire les surtensions de la tension d'entrée U. Le module de protection comprend un thyristor de protection contre des surtensions 27, une varistance 29 et un premier condensateur 33.

La varistance 29 est connectée électriquement entre un deuxième point intermédiaire 35 et un troisième point intermédiaire 67. Le deuxième point intermédiaire 35 et le troisième point intermédiaire 67 appartiennent au module de protection 9. Le deuxième point intermédiaire 35 et le troisième point intermédiaire 67 sont disposés entre la première borne 3 et la deuxième borne 5. La varistance 29 présente une résistance variable en fonction de la tension à ses bornes. Lorsque la tension aux bornes de la varistance 29 est faible, donc en l'absence de surtension, la varistance 29 présente une première valeur de résistance, relativement grande, et est donc traversée par un courant relativement faible. Lorsque la tension aux bornes de la varistance 29 dépasse un certain seuil, la résistance de la varistance 29 chute drastiquement jusqu'à atteindre une deuxième valeur de résistance, permettant le passage d'un courant relativement grand à travers la varistance 29, dissipant une partie de l'énergie électrique de la surtension. On considère alors que la varistance 29 est passante.

A titre d'exemple non limitatif, la première valeur de résistance est supérieure à 10 mégaohms pour une tension d'entrée U par exemple de l'ordre de 200 à 250V., alors que la deuxième valeur de résistance est inférieure à 0,5 ohms en présence d'une surtension.

Le thyristor de protection contre des surtensions 27 est connecté électriquement entre un premier point intermédiaire 65 et le deuxième point intermédiaire 35, en série avec la varistance 29. Le premier point intermédiaire 65 appartient au module de protection 9. Le premier point intermédiaire 65 est disposé entre la première borne 3 et la deuxième borne 5. La présence du thyristor de protection contre des surtensions 27 permet de limiter la taille de varistance 29 nécessaire pour faire face aux surtensions du réseau électrique externe, de limiter un courant de fuite circulant dans la varistance 29 en l'absence de surtension, de diminuer le risque de court-circuit survenant en cas de défaillance de la varistance 29, ainsi que de fiabiliser une déviation du courant en cas de surtension importante.

Avantageusement, le thyristor de protection contre des surtensions 27 est un ensemble composé de deux thyristors et de diodes de protection.

Le premier condensateur 33 est connecté électriquement en parallèle de la varistance 29. En combinaison avec les fils résistifs 11 et 13, le premier condensateur 33 protège la varistance 29 en cas de forte surtension, en dissipant également une partie de l'énergie électrique de la surtension. La présence des fils résistifs 11 et 13 et du premier condensateur 33 permet donc d'augmenter la durée de vie du déclencheur 1, et notamment de la varistance 29, dans le contexte d'un réseau électrique externe instable.

Dans l'exemple représenté sur la figure 1, le module de protection 9 comprend, en outre, une première résistance 31 en série avec le premier condensateur 33, la première résistance 31 et le premier condensateur 33 étant en parallèle de la varistance 29. La première résistance 31 et le premier condensateur 33 forment ainsi une boucle RC en parallèle de la varistance 29, fournissant une protection accrue à la varistance 29 en cas de forte surtension.

Toutefois, la première résistance 31 est optionnelle puisque, comme expliqué plus haut, son rôle peut être assumé par les fils résistifs 11 et 13, permettant un gain de place dans le déclencheur 1.

A titre d'exemple non limitatif, la première résistance 31 a une valeur de résistance comprise entre 0 et 63 ohms (le cas à 0 Ohms correspondant à l'absence de première résistance 31), alors que le premier condensateur 33 a une valeur de capacité comprise entre 10 picofarads et 100 nanofarads, pour une tension d'entrée U par exemple de l'ordre de 200 à 250V.

En outre, le module de protection 9 présente une capacité globale améliorant une comptabilité électromagnétique du déclencheur 1, c'est-à-dire procurant au déclencheur 1 une faible sensibilité à des perturbations électromagnétiques.

Le premier fil résistif 11 est connecté en série avec l'élément fusible 15. L'ensemble constitué du premier fil résistif 11 et de l'éléments fusible 15 en série est connecté électriquement entre la première borne 3 et le module de protection 9. Dans l'exemple représenté sur la figure 1, l'élément fusible 15 est connecté électriquement à la première borne 3 et le premier fil résistif 11 est connecté électriquement au module de protection 9. En variante non représentée, l'élément fusible 15 est connecté électriquement au module de protection 9 et le premier fil résistif 11 est connecté électriquement à la première borne 3.

Le premier fil résistif 11 est un fil conducteur présentant une résistance supérieure ou égale à 0.5Ω, de préférence égale à 1,5Ω pour une tension d'entrée U par exemple de l'ordre de 200 à 250V. Le choix d'un fil résistif 11 permet un gain de place et une simplification par rapport à un fil conducteur connecté à un élément résistif à part entière.

De même, le deuxième fil résistif 13 relie la deuxième borne 5 au module de protection 9 et est un fil conducteur présentant une résistance supérieure ou égale à 0.5Ω, de préférence égale à 1,5Ω pour une tension d'entrée U par exemple de l'ordre de 200 à 250V.

Avantageusement, les premier et deuxième fils résistifs 11 et 13 présentent des résistances sensiblement égales. Cette symétrie permet d'améliorer la compatibilité électromagnétique du déclencheur 1.

En variante, les fils résistifs 11 et 13 sont des fils conducteurs connectés à un élément résistif respectif, comme représenté sur les figures 1 et 2.

Les fils résistifs 11 et 13 permettent une dissipation d'une partie de l'énergie électrique de surtension sans nécessiter beaucoup d'espace.

L'élément fusible 15 est configuré pour fondre lorsqu'il est traversé par un courant supérieur à un courant critique prédéterminé, ce qui permet de protéger l'ensemble des composants du déclencheur 1 en cas de défaillance électrique, prolongeant ainsi leur durée de vie. En outre, la présence des fils résistifs 11 et 13 et de l'élément fusible 15 permet de dissiper l'énergie électrique en cas de défaillance du thyristor de protection contre des surtensions 27 et/ou de la varistance 29, diminuant ainsi un risque de surchauffe et/ou d'incendie du déclencheur 1.

Le module de détection 19 est optionnel.

Le module de détection 19 tire avantage de l'architecture présentée précédemment en détectant les surtensions, à des fins de surveillance des évènements de surtension et de maintenance prédictive des composants du déclencheur 1, et notamment de la varistance 29. En effet, connaissant le nombre d'occurrences d'évènement de surtension, au moyen du module de détection 19, et le nombre de basculements au cours de vie de la varistance 29, au moyen d'abaques fournis par le constructeur de la varistance, il est possible de prédire la durée de vie restante de la varistance 29. En outre, le module de détection 19 permet de détecter un court-circuit au niveau du deuxième point intermédiaire 35, révélant une défaillance de la varistance 29 et du thyristor de protection contre des surtensions 27.

Le module de détection 19 est connecté électriquement au moins au deuxième point intermédiaire 35 et à une unité de contrôle 37 interne au déclencheur 1 et au disjoncteur 2.

En variante non représentée, l'unité de contrôle 37 est intégré au disjoncteur 2.

Le module de détection 19 comprend une première diode 39, une deuxième résistance 41, une troisième résistance 43, une deuxième diode 53, une troisième diode 55, un deuxième condensateur 49 et une quatrième résistance 59.

La première diode 39 est connectée électriquement entre le deuxième point intermédiaire 35 et un quatrième point intermédiaire 69. Le quatrième point intermédiaire 69 appartient au module de détection 19. Le quatrième point intermédiaire 69 est disposé entre le deuxième point intermédiaire 35 et l'unité de contrôle 37. La deuxième résistance 41 est connectée électriquement en série avec la première diode 39, entre le quatrième point intermédiaire 69 et un cinquième point intermédiaire 45. Le cinquième point intermédiaire 45 appartient au module de détection 19. Le cinquième point intermédiaire 45 est disposé entre le deuxième point intermédiaire 35 et l'unité de contrôle 37. La troisième résistance 43 est connectée électriquement en série avec la deuxième résistance 41, entre le cinquième point intermédiaire 45 et une masse 47. Le cinquième point intermédiaire 45 est connecté électriquement à l'unité de contrôle 37. En fonction d'une valeur de tension entre le cinquième point intermédiaire 45 et la masse 47 de du déclencheur 1, l'unité de contrôle 37 est apte à détecter une occurrence d'un évènement de surtension.

A titre d'exemple non limitatif, la deuxième résistance 41 et la troisième résistance 43 ont chacune une valeur de résistance comprise entre 10 ohms et plusieurs megaohms, pour une tension d'entrée U par exemple de l'ordre de 200 à 250V.

A titre d'exemple non limitatif, le deuxième condensateur 49 a une valeur de capacité comprise entre 10 picofarads et 100 microfarads, alors que la quatrième résistance 59 a une valeur de résistance comprise entre 10 ohms et plusieurs mégohms, pour une tension d'entrée U par exemple de l'ordre de 200 à 250V.

La deuxième diode 53 est connectée électriquement entre le troisième point intermédiaire 67 et le quatrième point intermédiaire 69. La troisième diode 55 est connectée électriquement entre le cinquième point intermédiaire 45 et un sixième point intermédiaire 63. Le sixième point intermédiaire 63 appartient au module de détection 19. Le sixième point intermédiaire 63 est disposé entre le deuxième point intermédiaire 35 et l'unité de contrôle 37. Le deuxième condensateur 49 est connecté électriquement entre le sixième point intermédiaire 63 et la masse 47. La quatrième résistance 59 est connectée électriquement entre le sixième point intermédiaire 63 et l'unité de contrôle 37. Cette deuxième connexion du module de détection 19 à l'unité de contrôle 37 permet à l'unité de contrôle 37 de détecter, en plus de l'occurrence de l'évènement de surtension, le niveau de cette surtension.

Avantageusement, le bloc de charge 7 comprend en outre un troisième condensateur 61, connecté électriquement en parallèle de la charge 16. Le troisième condensateur 61 permet de filtrer la tension U' aux bornes de la charge 16, afin d'améliorer la mesure de cette tension par le module de mesure 21.

Un procédé de déclenchement d'un disjoncteur 2 au moyen d'un déclencheur 1 conforme à ce qui précède est décrit dans la suite de la description.

Le procédé de déclenchement est exécuté automatiquement, du fait de l'architecture électronique du déclencheur 1 décrite précédemment, en cas de surtension survenant entre la première borne 3 et la deuxième borne 5.

La surtension génère un courant de surtension entre la première borne 3 et la deuxième borne 5. Le courant de surtension circule nécessairement à travers l'élément fusible 15, le premier fil résistif 11 et le deuxième fil résistif 13. Dès l'apparition de la surtension, le procédé comprend une déviation primaire d'au moins une partie du courant de surtension à travers le thyristor de protection contre des surtensions 27 et la varistance 29 du module de protection 9. Dit autrement, le courant ne circule plus intégralement à travers le bloc de charge 7. Cela permet de protéger la charge 16 contre la surtension.

En même temps que la déviation primaire, le procédé comprend une déviation secondaire d'au moins une autre partie du courant de surtension à travers le premier condensateur 33. Dit autrement, la partie du courant de surtension circulant à travers le module de protection 9 se divise entre la varistance 29 d'un part, et le premier condensateur 33 d'autre part. Cette déviation secondaire, en combinaison avec la circulation du courant de surtension à travers les fils résistifs 11 et 13, permet de protéger la varistance 29 d'une dégradation prématurée due à de fortes surtensions à répétition. En particulier, la varistance 29 devenant généralement passante quelques nanosecondes après le thyristor de protection contre des surtensions 27, la déviation secondaire protège la varistance 29 pendant cet intervalle.

En outre, si le courant de surtension demeure trop important malgré les déviations précitées, l'élément fusible 15 fond afin de préserver le déclencheur 1 d'un échauffement trop important voire d'un incendie.

En même temps que les déviations primaires et secondaires, le procédé comprend une activation de l'actionneur mécanique 24 par la charge 16, entraînant avantageusement une ouverture ou une fermeture du disjoncteur 2. Plus précisément, la surtension de la tension d'entrée U se répercute sur la tension U' aux bornes de la charge 16, qui est mesurée par le module de mesure 21. Le module de mesure 21 effectue une comparaison de la tension mesurée avec le seuil de tension maximale prédéterminé.

Le procédé comprend avantageusement une détection de l'évènement de surtension grâce au module de détection 19. Plus précisément, la surtension de la tension d'entrée U se répercute au niveau du deuxième point intermédiaire 35, puis au niveau du cinquième point intermédiaire 45, qui est relié à l'unité de contrôle 37. Grâce à cette entrée, l'unité de contrôle 37 est apte à comptabiliser une occurrence d'un évènement de surtension. La détection de l'évènement de surtension permet une surveillance des évènements de surtension par l'unité de contrôle 37, ainsi que, comme expliqué précédemment, une maintenance prédictive des composants du déclencheur 1.

Toute caractéristique décrite ci-dessus pour un mode de réalisation ou une variante, peut être mis en œuvre également dans les autres modes de réalisation et variantes décrits ci-dessus, pour autant que techniquement possible.

## Revendications

1. Déclencheur shunt à minimum ou manque de tension (1) pour un disjoncteur (2), le déclencheur (1) comprenant :
- une première borne (3) et une deuxième borne (5) d'application d'une tension d'entrée (U) entre elles ;
- un bloc de charge (7), connecté électriquement entre la première borne (3) et la deuxième borne (5), comprenant une charge (16) configurée pour actionner une ouverture ou une fermeture du disjoncteur (2) au moyen d'un actionneur mécanique (24) ; et
- un module de protection (9), connecté électriquement entre la première borne (3) et la deuxième borne (5) et comprenant :
• un premier point intermédiaire (65), un deuxième point intermédiaire (35) et un troisième point intermédiaire (67) ;
• un thyristor de protection contre des surtensions (27), connecté électriquement entre le premier point intermédiaire (65) et le deuxième point intermédiaire (35) ; et
• une varistance (29), connectée électriquement entre le deuxième point intermédiaire (35) et le troisième point intermédiaire (67), en série avec le thyristor de protection contre des surtensions (27), le thyristor de protection contre des surtensions (27) et la varistance (29) étant en parallèle du bloc de charge (7) ;
**caractérisé en ce que** le déclencheur (1) comprend en outre :
- un premier condensateur (33), appartenant au module de protection (9), connecté électriquement en parallèle de la varistance (29) ;
- un élément fusible (15) et un premier fil résistif (11) en série entre eux, connectés électriquement entre la première borne (3) et le module de protection (9), le premier fil résistif (11) présentant une résistance supérieure ou égale à 0.5Ω ; et
- un deuxième fil résistif (13), présentant une résistance supérieure ou égale à 0.5Ω, connecté électriquement entre le module de protection (9) et la deuxième borne (5).

2. Déclencheur (1) selon la revendication 1, comprenant une première résistance (31) en série avec le premier condensateur (33), la résistance (31) et le premier condensateur (33) étant en parallèle de la varistance (29).

3. Déclencheur (1) selon l'une quelconque des revendications précédentes, dans lequel le bloc de charge (7) comprend un pont redresseur de tension (17), le pont redresseur de tension (17) prenant en entrée une tension (U) aux bornes du module de protection (9) et donnant en sortie une tension (U') aux bornes de la charge (16).

4. Déclencheur (1) selon l'une quelconque des revendications précédentes, comprenant un module de détection (19), connecté électriquement au moins au deuxième point intermédiaire (35) et à une unité de contrôle (37) et configuré pour détecter et transmettre à l'unité de contrôle (37) une occurrence d'un évènement de surtension entre la première borne (3) et la deuxième borne (5).

5. Déclencheur (1) selon la revendication 4, dans lequel le module de détection (19) comprend :
- un quatrième point intermédiaire (69), un cinquième point intermédiaire (45) et un sixième point intermédiaire (63) ;
- une première diode (39), connectée électriquement entre le deuxième point intermédiaire (35) et un quatrième point intermédiaire (69) ;
- une deuxième résistance (41), connectée électriquement entre le quatrième point intermédiaire (69) et un cinquième point intermédiaire (45) ;
- une troisième résistance (43), connectée électriquement entre le cinquième point intermédiaire (45) et une masse (47) ;
- une deuxième diode (53), connectée électriquement entre le troisième point intermédiaire (67) et le quatrième point intermédiaire (69) ;
- une troisième diode (55), connectée électriquement entre le cinquième point intermédiaire (45) et un sixième point intermédiaire (63) ;
- un deuxième condensateur (49), connecté électriquement entre le sixième point intermédiaire (63) et la masse (47) ; et
- une quatrième résistance (59), connectée électriquement entre le sixième point intermédiaire (63) et l'unité de contrôle (37) ;
et dans lequel le cinquième point intermédiaire (45) est connecté électriquement avec l'unité de contrôle (37).

6. Déclencheur (1) selon l'une quelconque des revendications précédentes, dans lequel le bloc de charge (7) comprend un troisième condensateur (61), de filtrage, connecté électriquement en parallèle de la charge (16).

7. Déclencheur (1) selon l'une quelconque des revendications précédentes, dans lequel la charge (16) comprend :
- un module de mesure (21), configuré pour mesurer la tension (U') aux bornes de la charge (16) ;
- une bobine d'appel (23), configurée pour faire activer l'actionneur mécanique (24) ; et
- une bobine de maintien (25), configurée pour maintenir l'actionneur mécanique (24) en position.

8. Déclencheur (1) selon la revendication 7, dans lequel le déclencheur (1) est un déclencheur shunt à minimum de tension et l'actionneur mécanique (24) est configuré pour :
- ouvrir le disjoncteur (2) après activation par la bobine d'appel (23) ; ou
- fermer le disjoncteur (2) après activation par la bobine d'appel (23).

9. Déclencheur (1) selon la revendication 7, dans lequel le déclencheur (1) est un déclencheur shunt à manque de tension et l'actionneur mécanique (24) est configuré pour :
- ouvrir le disjoncteur (2) après activation par la bobine d'appel (23) ; et
- empêcher la fermeture du disjoncteur (2) lorsque l'actionneur mécanique (24) est maintenu en position par la bobine de maintien (25).

10. Ensemble (4), comprenant :
- un déclencheur (1) selon l'une quelconque des revendications précédentes, et
- un disjoncteur (2).

11. Procédé de fonctionnement du déclencheur (1) appartenant à un ensemble (4) selon la revendication 10, en cas de surtension entre la première borne (3) et la deuxième borne (5), engendrant un courant de surtension entre la première borne (3) et la deuxième borne (5), le procédé comprenant :
- une circulation du courant de surtension à travers l'élément fusible (15), le premier fil résistif (11) et le deuxième fil résistif (13) ;
- une déviation primaire d'au moins une partie du courant de surtension à travers le thyristor de protection contre des surtensions (27) et la varistance (29) ;
- une déviation secondaire d'au moins une autre partie du courant de surtension à travers le premier condensateur (33) ; et
- activation de l'actionneur mécanique (24) par la charge (16).
